# EUROPÄISCHE PATENTANMELDUNG

(11) **EP 2 479 132 A2**
(43) Veröffentlichungstag der Anmeldung: **25.07.2012**
(21) Anmeldenummer: 11009993.4
(22) Anmeldetag: 20.12.2011
(51) Int. Cl.: B66C 5/02, B66C 19/02, B60P 1/54

(54) **Ladekran und Fahrzeug mit Ladekran**

(30) Priorität: 29.11.2010 DE 102010056354
(71) Anmelder: Theuerer, Herbert, 97447 Frankenwinheim (DE)
(72) Erfinder: Theuerer, Herbert, 97447 Frankenwinheim (DE)

(57) **Zusammenfassung**

Die vorliegende Erfindung betrifft einen Ladekran (18, 51) für ein Fahrzeug oder Anhänger (1), umfassend zumindest eine Traverse (4, 53, 63, 74) und eine an der Traverse (4, 53, 63, 74) befestigte und vom Fahrzeug bzw. Anhänger (1) wegweisende Stütze (5, 52, 61, 71). An der Traverse (4, 53, 63, 74) ist eine Laufkatze (6, 56, 76) mit Seilwinde (7, 57, 64) zur Aufnahme einer Last (8, 62, 80) längsverschieblich angeordnet, und die Stütze (5, 52, 61, 71) flurfrei auf dem Erdboden (21) zur endseitigen Abstützung der Traverse (4, 53, 63, 74) absetzbar ist.

In einem nebengeordneten Aspekt betrifft die Erfindung ein Fahrzeug oder einen Anhänger 1, der mit einem vorgenannten Ladekran ausgerüstet ist.

## Beschreibung

### HINTERGRUNG DER ERFINDUNG

Ein Ladekran ist eine manuell oder durch Motore betriebene Einrichtung zum vertikalen und horizontalen Verladen von Lasten. Er wird in der Regel zum Be- und Entladen von Schiffen(Stückgut und Container), Eisenbahn - und Lastkraftwagen eingesetzt.

Der Unterschied zu einem einfachen Hebezeug, das Bestandteil des Kranes sein kann, ist, dass der Kran flurfrei arbeitet und mehr als zwei Bewegungsrichtungen (auf/ab - links/rechts entspricht zwei Koordinatenrichtungen) ausführen kann (dreidimensionaler Arbeitsbereich)- d. h. die Last an einem anderen Punkt abzusetzen, als er sie aufgenommen hat. Flurfrei bedeutet, dass die Last hängend befördert wird, wie dies zum Beispiel bei Kränen der Fall ist.

Hauptanwendung des Ladekrans ist das Be- und Entladen von Fahrzeugen, auch Güterumschlag genannt, sowie die Verlastung von Gütern an einen bestimmten Punkt (Kurzdistanzen). Ein Ladekran ist eine Beladeeinrichtung, die auf einem Nutzfahrzeug, Eisenbahn- und Lastkraftwagen, Schiff, Anhänger) montiert ist, um dieses zu be- und entladen. Der Ladekran am LKW wurde von Büssing im Jahr 1958 eingeführt und auch an einem LKW angebaut. Den Weltmarkt bestimmen Modelle der Unternehmen HMF, Palfinger, HIAB, AutogruPM/PM und Fassi und Terex-Atlas.

### STAND DER TECHNIK

Die gebräuchlichen Ladekrane an Fahrzeugen arbeiten, wie bereits erwähnt, flurfrei. Fahrzeugeigene Ladekräne haben den Vorteil, dass eine Last an beliebigen Stellen aufgenommen bzw. abgesetzt werden kann, ohne dass ein externer Kran für den Lade- oder Beladevorgang herangeführt werden muss. Allerdings haben solche Ladekräne den Nachteile das der Kranausleger, der die frei schwebende Last trägt, sehr stabil ausgeführt werden muss, besonders wenn er sehr lang ist, wie es beispielsweise bei langgestreckten Fahrzeugen notwendig ist, um alle Bereiche der Ladefläche zu erreichen. Auch die Kransäule und der Kransockel, sowie das Fahrzeugchassis, an das der Ladekran montiert wird, müssen sehr stabil gebaut werden. Je länger der Kranausleger ist, (bzw. Je größer die seitliche Reichweite des Krans ist), desto größer wird das Drehmoment (bzw. Kippmoment), welches um den Schwerpunkt des Krans dreht. Dieses Kippmoment kann zum Umstürzen des Krans führen. Um dies zu verhindern, muss der Kran ein entsprechendes Gegenmoment aufbringen. Dieses Gegenmoment ist umso größer, je größer die Gewichtskraft ist, d.h. je schwerer der Kran ist. In der Praxis führen die angesprochenen Gründe dazu, dass ein Ladekran auf einem Fahrzeug für große Lasten schwer und massiv gebaut werden muss. Entsprechend aufwendig ist der Transport des Ladekrans. Wegen der massiven Bauweise wird mehr Material für den Ladekran benötigt, die Herstellungskosten steigen. Das große Gewicht des Ladekrans führt dazu, dass der LKW weniger Transportgewicht transportieren kann, weil das zulässige Transportgewicht um das Gewicht des Ladekrans reduziert werden muss. Sonst wäre der LKW überladen. Auch steigt aufgrund des hohen Gewichts der Kraftstoffverbrauch an, da tote Last transportiert werden muss.

### AUFGABE DER ERFINDUNG

Aufgabe der Erfindung ist es, durch geeignete konstruktive Maßnahmen die beschriebenen Nachteile zu umgehen und zu erreichen, dass das auf die Fahrzeuge und den am Fahrzeug angebauten Ladekran einwirkende Kippmoment verringert wird. Dadurch wird erreicht, dass die Ladekräne und die Fahrzeuge, gewichtsreduzierter gebaut werden können als bisher, ohne dass das maximale Gewicht, das sie heben können, reduziert werden muss, bzw. dass sie bei gleichem Eigengewicht eine schwerere Last heben können. Durch die leichtere Bauweise werden die beschriebenen Nachteile des Standes der Technik reduziert bzw. verhindert. Mit Hilfe der Erfindung werden die beschriebenen Nachteile des Stands der Technik überwunden.

### OFFENBARUNG DER ERFINDUNG

Mit Hilfe der Erfindung werden die beschriebenen Nachteile des Stands der Technik überwunden.

Erfindungsgemäß wird ein Ladekran für ein Fahrzeug oder Anhänger, umfassend zumindest eine Traverse und eine an der Traverse (befestigte und vom Fahrzeug bzw. Anhänger wegweisende Stütze vorgeschlagen, wobei an der Traverse eine Laufkatze mit Seilwinde zur Aufnahme einer Last längsverschieblich angeordnet ist und die Stütze flurfrei auf dem Erdboden zur endseitigen Abstützung der Traverse absetzbar ist.

Die Erfindung verringert das Gewicht von Ladekranen durch konstruktive Maßnahmen, ohne dass Einbußen bei der Leistungsfähigkeit auftreten. Die Leitungsfähigkeit eines Krans wird wesentlich durch das Gewicht, das der heben kann und durch die seitliche Reichweite definiert.

Ein leichterer Ladekran ist einfach und kostengünstig zu transportieren, dafür kann bei gleicher Tragleistung ein leichtes Zugfahrzeug (Kleinwagen), auf einem (z. B. ungebremsten) PKW-Anhänger eingesetzt werden. Der Transport ist billiger, weil kein kostspieliger, großer LKW angeschafft werden muss und eine Aushilfskraft mit PKW Führerschein statt eines Berufskraftfahrers eingesetzt werden kann. Bei gleichem Transportvolumen verbraucht ein leichteres Fahrzeug (z. B. LKW) weniger Kraftstoff.

Das nutzbare Transportgewicht des LKW vergrößert sich. Die Transportkosten der transportierten Güter verringern sich dadurch. Die leichtere Bauweise des Ladekrans bedeutet weniger Materialverbrauch für die Herstellung des Ladekrans. Die Herstellung des Ladekrans verbilligt sich dadurch.

In einer vorteilhaften Weiterbildung kann anhänger- bzw. fahrzeugseitig die Traverse durch einen Mast, insbesondere einen um seine Längsachse verdrehbaren Mast abgestützt werden, wobei bevorzugt der Mast lösbar, insbesondere werkzeugfrei mit dem Fahrzeug koppelbar ist.

Um eine Last mit einem Seilzug anheben zu können muss sich der am Seil hängende Kranhaken stets über der Last befinden. Die Verwendung eines in die Höhe ragenden Masts ist daher von Vorteil besonders bei hohen Gegenständen, die mit dem Ladekran angehoben werden sollen. Die Tatsache, dass der Mast um seine Längsachse drehbar ist, verleiht dem Ladekran die notwendige Flexibilität, um Lasten, die um den Ladekran verstreut liegen, anheben zu können. Ein starrer Mast wäre viel zu unflexibel und umständlich, da wie bereits erwähnt, der Kranhaken stets über der Last positioniert werden muss. Ein wichtiger Vorteil des drehbaren Masts ist es, dass Hindernisse, die den Weg der Stütze kreuzen umgangen werden können. Besonders die Kombination von drehbarem Mast, teleskopierbarer Traverse und Rad (an der Stütze befindlich) ermöglichen das Umgehen von Hindernissen. Die Möglichkeit des Umgehens kompensiert den Nachteil, dass der erfindungsgemäße Ladekran nicht flurfrei (d. h. über Hindernisse hinweg) arbeiten kann. Durch die lösbare Verbindung des Masts kann der Ladekran vom Fahrzeug abgekoppelt werden. Dies ist von Vorteil, wenn der Ladekran nicht benötigt wird. Somit ist das Fahrzeug leichter und kann einen größere Nutzlast befördern. Der Ladekran wird während der Fahrt nicht hinderlich . Der Fahrer muss zum Beispiel nicht darauf achten mit dem Ladekran an niedrigen Durchfahrten hängen zu bleiben.

In einer vorteilhaften Weiterbildung kann zwischen Mast und Traverse zumindest eine Strebe angeordnet sein, wodurch die Traverse mit Stütze gegenüber dem Mast flurfrei in einem Winkel a, bevorzugt a=90° abstützbar ist. Die Stütze kann somit eingezogen und vom Erdboden hochgehoben werden. Im Falle, dass der Ladekran unbelastet ist (d.h. Es hängt keine Last am Kranhaken) ist dies von Vorteil. Die Stütze wird in unbelastetem Zustand des Krans nicht unbedingt benötigt, da der Ladekran das Eigengewicht der Traverse und der Stütze ohne Abstützung am Boden tragen kann. Dies hat den Vorteil, dass die Stütze flurfrei (und damit einfach und schnell) an die vorgesehene Position bewegt werden kann. Ist die Stütze positioniert, dann kann sie auf den Boden gelassen werden und die Last kann mit dem Kran angehoben werden.

In einer vorteilhaften Weiterbildung kann die Traverse durch flurfrei absetzbare Stützen allseitig abstützbar sein, so dass ein Portalkran realisierbar ist, und bevorzugt die Stützen im flurfreien Zustand mittels Halter an dem Fahrzeug bzw. Anhänger befestigbar sind.

Der Vorteil zweier oder mehrerer flurfrei absetzbarer Stützen des Krans ist, dass sie im Zusammenspiel Hindernisse überwinden können. Hat der Ladekran nur eine Stütze, so wird diese durch das Gewicht der Last immer gegen den Erdboden gedrückt. Besitzt der Ladekran dagegen mehrere (z. b. zwei Stützen) so kann die Erste vom Erdboden in die Luft angehoben werden, während die zweite Stütze die Last gegen den Erdboden abstützt. Die entlastete, erste Stütze kann über ein Hindernis gehoben werden. Anschließend kann sie auf den Boden gesetzt werden und übernimmt dann die Funktion des Abstützens der Last von der zweiten Stütze. Auf diese Art und Weise können die beiden Stützen abwechseln eine Stützfunktion übernehmen und im Zusammenwirken Hindernisse überwinden. Vorteilhaft ist es mehr als zwei Stützen zu verwenden, da der Ladekran so eine höhere Standsicherheit besitzt.

In einer vorteilhaften Weiterbildung kann der Portalkran zu vier endseitig miteinander verbundene Traversen zur Ausbildung eines Traversenrechtecks umfassen, die durch vier eckseitig angeordnete Stützen am Boden abstützbar sind, wobei zwei parallele Traversen mittels einer querverschieblichen weiteren Traverse verbunden sind, und die weitere Traverse eine Laufkatze mit Seilwinde umfasst.

Der Portalkran erfüllt die Funktion eines Mitnahmestaplers wobei der Leitgedanke der Erfindung erhalten bleibt. Mitnahmestapler werden üblicherweise von einem LKW huckepack mit auf den Transport genommen. Zweck des Mitnahmestaplers ist es, den LKW be- oder entladen zu können, falls am Ort der Be- oder Entladung kein Stapler zur Verfügung steht.

Der Leitgedanke der Erfindung ist es, eine leichte, filigrane und preiswerte Anordnung aus Ladekran und Nutzfahrzeug (z.b. PKW-Anhänger) zu schaffen. Die leichte, filgrane Bauweise wird hauptsächlich durch die Stützen des Portalkrans erreicht unter Verzicht auf die Flurfreiheit, gemäß dem Leitgedanken der Erfindung. Auch die Verwendung leichter Materialien (z. b. Alu) oder die Verwendung leichter Gittermastelemente führen zu einem niedrigen Gewicht des Portalkrans. Der Portalkran kann von Fahrzeug abgekoppelt werden und hat wegen seiner Stützen eine vom Fahrzeug unabhängige Standfestigkeit. Durch die Möglichkeit des Abkoppelns und die Standfestigkeit hat er einen großen Aktionsradius (theoretisch unendlich), der weit vom Fahrzeug entfernt liegen kann.

In einer vorteilhaften Weiterbildung kann Mast, Stütze und/oder Traverse längsveränderlich, insbesondere ausschiebbar oder teleskopierbar ausgebildet sein. Die Längsveränderlichkeit und die Teleskopierbarkeit, d.h.die Möglichkeit die Außenabmessungen wie Länge , Breite und Höhe zu verändern, ist von Vorteil wenn der Ladekran durch enge Tore oder niedrige Hallendächer hindurch muss. In diesem Fall kann er sich genügend klein machen. Nach dem engen Tor, ist es vorteilhaft, dass die Standfläche des Ladekrans wieder größer gemacht werden kann. Eine größere Grundfläche erhöht die Standfestigkeit des Ladekrans, da ein hoher, schmaler Kran leichter umfällt als ein niedriger und breiter Kran. Der ausschiebbare Mast ist von Vorteil wenn der Kranhaken hoch hängen muss, da eine hohe Last gehoben werden soll.

In einer vorteilhaften Weiterbildung kann der Ladekran zumindest einen Motor insbesondere einen Elektro- Hydraulik- oder Pneumatikmotor, bevorzugt fahrzeug- bzw. Anhänger gespeisten Motor umfassen, wobei der Motor zur Längenveränderung der Stütze, des Mastes, der Traverse, zur Längsachsenrotation des Mastes, Antrieb zumindest eines Rades und/oder der Laufkatze und Seilwinde eingerichtet ist.

Ein oder mehrere Motore erleichtern die Realisierung der erforderlichen Bewegungen des Ladekrans, da weniger oder keine menschliche Körperkraft notwendig ist. Der Bediener des Ladekrans wird von körperlicher Anstrengung befreit. Durch die Motore ist die Leistungsfähigkeit des Ladekrans höher als beim Einsatz von Muskelkraft. In einer vorteilhaften Weiterbildung kann Mast, Stütze und/oder Traverse röhrenförmig, insbesondere mit runden oder rechteckigen Rohrprofil oder durch ein Stabtragwerk oder einer Gittermastkonstruktion ausgebildet sein.

Eine Rohrprofil, Stabtragwerk oder Gittermastkonstruktion hat eine höhere Festigkeit und Steifigkeit als ein massiver Balken bei vergleichbarem Gewicht. In der Veranstaltungstechnik gebräuchliche Gittermastelemente (sogenannte Traversen) können vorteilhaft für den Bau des Ladekrans verwendet werden. Sie werden durch Zusammenstecken miteinander verbunden und mit Querbolzen zusammengehalten. Sie werden passgenau gefertigt, so dass sie untereinander austauschbar sind. Das ist von Vorteil. Auch die Traversen verschiedener Hersteller sind kombinierbar. Dadurch wird die Beschaffung und Verfügbarkeit erleichtert. Trotz der passgenauen Fertigung sind sie wegen der Massenfertigung preiswert.

In einer vorteilhaften Weiterbildung kann zwischen Mast und Traverse und/oder zwischen Stütze und Traverse zumindest ein Gelenk zur winkelvariablen Abstützung mit einstellbaren Winkel a angeordnet sein. Das Gelenk ist von Vorteil, da über das Gelenk kein Drehmoment in das Chassis des Fahrzeugs eingeleitet wird. Das Drehmoment würde Kräfte auf das Chassis ausüben. In Folge dessen müsste das Chassis sehr stabil und damit auch sehr schwer ausgeführt werden.

In einer vorteilhaften Weiterbildung kann am bodenseitigen Ende der Stütze ein Rad insbesondere eine Lenkrolle angeordnet sein.

Die Lenkrolle hat den Vorteil, dass die Stütze über den Boden gerollt werden kann, wenn die Bewegungsfreiheit der Stütze durch ein Hindernis eingeschränkt ist. Die Stütze verhindert dass der Ladekran flurfrei arbeiten kann, da sie in Kontakt mit dem Erdboden steht. Die Rolle ermöglicht im Zusammenspiel mit der teleskopbierbaren Traverse, dass die Stütze dem Hindernis ausweichen kann.

In einer vorteilhaften Weiterbildung kann an dem vom Fahrzeug bzw. Anhänger wegweisenden traversenseitigen Ende der Traverse zumindest eine weitere Stütze angeordnet sein, insbesondere eine weitere Traverse mit zumindest einer daran angeordneten weiteren Stütze angeordnet sein, wobei bevorzugt die weitere Traverse gegenüber der Traverse horizontal und/oder vertikal verschwenkbar ist.

Die weiteren Stützen erhöhen die Standsicherheit des Ladekrans. Eine einzelne Stütze kann beim Einwirken von Kräften leichter umkippen als zwei oder mehrere Stützen. Die Möglichkeit die Traverse horizontal zu schwenken kann Bodenunebenheiten ausgleichen.Die Möglichkeit die Traverse um die vertikale Achse zu schwenken verbessert die Beweglichkeit der Traverse. Die bessere Beweglichkeit ist von Vorteil, wenn die Stützen über Hindernisse bewegt werden müssen (z. b. Über einen Mauer hinweg)

In einer vorteilhaften Weiterbildung kann die weitere Traverse längenveränderlich sein und/oder die weitere Traverse gegenüber dem Befestigungspunkt mit der Traverse positions und/oder längsverschieblich sein.

Die Längenveränderlichkeit und Längsverschiebbarkeit verbessert ebenfalls die Beweglichkeit und damit die Möglichkeit Hindernisse zu überwinden. Oder zu umgehen.

In einer vorteilhaften Weiterbildung des Fahrzeugs bzw. Anhängers kann ein Belastungsfahrzeug insbesondere ein PKW zur Erhöhung des Eigengewichts und der Standfestigkeit des Fahrzeugs bzw. Anhängers auf das Fahrzeug bzw. Anhänger ladbar sein und/oder Stützbeine, insbesondere herausfahrbare Stützbeine zur seitlichen Stabilisierung des Fahrzeugs bzw. Anhängers angeordnet sein.

Vorteilhaft ist, dass der PKW gleichzeitig als Zugfahrzeug für den PKW Anhänger dient, also so wie so am Einsatzort zur Verfügung steht. Durch die Lösbare Verbindung von Ladefläche und Fahrzeugchassis wird zum einen Platz gemacht, um das Belastungsfahrzeug auf das Chassis zu fahren, zum anderen kann die Ladefläche neben das Chassis gestellt werden, und von Ladekran be- oder entladen werden. Nachdem die Ladefläche des Anhängers mit dem Ladekran beladen wurde, kann der PKW von Chassis heruntergefahren werden. Das Chassis kann wieder unter die Ladefläche geschoben werden und der Anhänger kann wieder mit der Ladefläche verbunden werden. Anschließend kann mit dem PKW (Zugfahrzeug) der Anhänger weg gefahren werden.

In einer vorteilhaften Weiterbildung kann das Fahrzeug bzw. Anhänger weiterhin einen Stromgenerator zur Bereitstellung von elektrischer Energie zur Versorgung elektrischer Verbraucher, insbesondere Motore des Ladekrans umfassen.

Durch den Stromgenerator steht eine Stromnetz unabhängige Energiequelle zur Verfügung. Einsätze des Ladekrans im Gelände, wo kein Stromanschluss zur Verfügung steht sind möglich.

### Zeichnungen

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: perspektivisch ein erstes Ausführungsbeispiel eines erfindungsgemäßen Ladekrans;
- **Fig. 2**: ein erstes Ladeszenario des Ladekrans der Fig. 1;
- **Fig. 3**: ein zweites Ladeszenario des Ladekrans der Fig. 1;
- **Fig. 4**: ein drittes Ladeszenario des Ladekrans der Fig. 1;
- **Fig. 5**: ein viertes Ladeszenario des Ladekrans der Fig. 1;
- **Fig. 6**: perspektivisch ein zweites Ausführungsbeispiel eines erfindungsgemäßen Ladekrans;
- **Fig. 7**: eine Vorderansicht des zweiten Ausführungsbeispiels der Fig. 6;
- **Fig. 8**: ein erstes Ladeszenario des Ladekrans der Fig. 6;
- **Fig. 9**: ein zweites Ladeszenario des Ladekrans der Fig. 6;
- **Fig. 10**: ein weiteres Ausführungsbeispiel eines erfindungsgemäßen Ladekrans;
- **Fig. 11**: Ladeszenarien eines Ausführungsbeispiels eines erfindungsgemäßen Ladekrans;
- **Fig. 12**: ein weiteres Ausführungsbeispiel eines erfindungsgemäßen Ladekrans;
- **Fig. 13**: eine perspektivische Darstellung des Ladekrans der Fig. 12;
- **Fig. 14**: ein Ladeszenario eines erfindungsgemäßen Ladekrans;
- **Fig. 15**: ein weiteres Ausführungsbeispiel eines erfindungsgemäßen Ladekrans;
- **Fig. 16**: Detaildarstellungen des Ladekrans der Fig. 15;
- **Fig. 17**: ein weiteres Darstellung des Ladekrans nach Fig. 15;
- **Fig. 18**: ein weiteres Ausführungsbeispiel eines erfindungsgemäßen Ladekrans;
- **Fig. 19**: Detaildarstellungen des Ladekrans der Fig. 18 ohne Last;
- **Fig. 20**: Detaildarstellungen des Ladekrans der Fig. 18 bei Lasttransport;

### Ausführungsformen der Erfindung

In den Figuren sind gleiche oder gleichartige Komponenten mit gleichen Bezugszeichen beziffert.

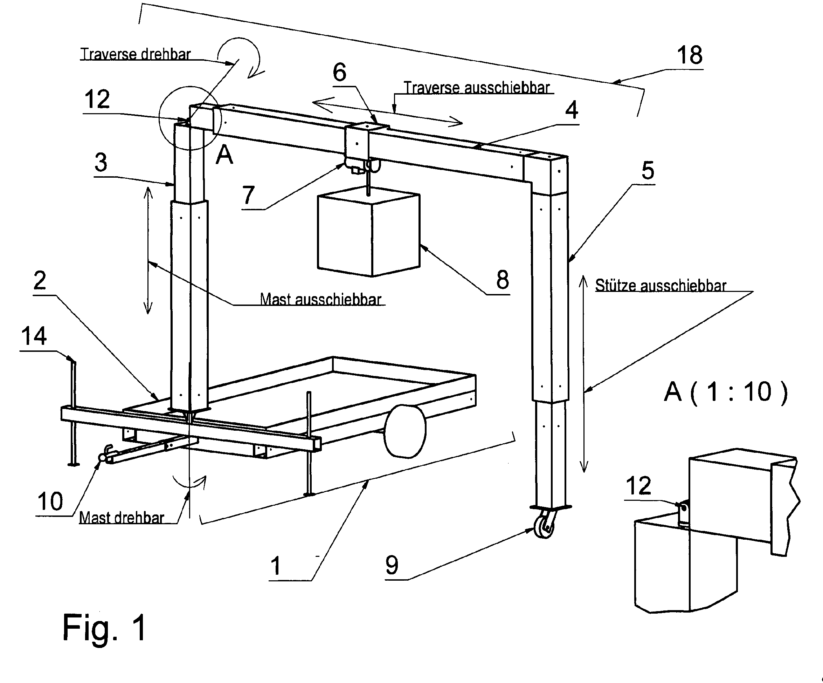

Fig. 1 zeigt ein Fahrzeug 1 insbesondere ein PKW-Anhänger. Das Fahrzeug besitzt eine Ladefläche 2. Über die Deichsel 10 kann der Anhänger an ein Fahrzeug angekuppelt werden. Der Anhänger 1 stützt sich mit Hilfe von Stützbeinen 11 gegen den Erdboden ab. Am Fahrzeug 1 ist ein Mast 3 montiert, der ausschiebbar, d.h. längenveränderlich ist. Der Mast 3 kann durch ein Drehgelenk am Fußpunkt des Masts 3 mit dem Chassis des Fahrzeuges 1 längsachsendrehbar verbunden sein. Am Mast 3 ist am oberen Ende eine horizontal angeordnete Traverse 4 befestigt, die ebenfalls ausschiebbar, d.h. längenveränderlich ist. Die Traverse 4 ist mit dem Mast 3 über ein Gelenk 12 verbunden. Das Gelenk 12 ermöglicht es, die Traverse 4 um die Drehachse 12 zu schwenken.Somit kann Traverse 6 gegenüber Mast 3 beliebig abgewinkelt und auch um die Längsachse des Mastes 3 gedreht werden. Die Traverse 4 wird von einer Stütze 5 abgestützt, die ebenfalls ausschiebbar ist. Mast 3, Traverse 4 und Stütze 5 bilden einen Ladekran 18 , der einem sogenannten Bockkran ähnelt. Durch die Ausschiebbarkeit von Mast 3, Traverse 4 und Stütze 5 kann Hebehöhe, Hebeumfang und beispielsweise Ausgleich eines abschüssigen Geländes ausgeglichen werden, so dass eine große Flexibilität bei Lastgröße, Absetzpunkt und Geländebeschaffenheit erreichbar ist. Der Ladekran 18 stützt sich über einen Träger 13 bzw. über Stützbeine 14 gegen den Erdboden ab. Auf der Traverse 4 ist ein Laufkatze 6 montiert, Die Laufkatze 6 ist entlang der Traverse 4 verfahrbar. An der Laufkatze ist eine Seilwinde 7 montiert. An der Seilwinde hängt eine Last 8. Die Last 8 kann mittels der Seilwinde auf die Ladefläche 2 herabgelassen werden oder entlang der Traverse 4 bewegt und dann neben dem Anhänger 1 abgelassen werden. An der Stütze 5 befindet sich ein Rad 9 Mit Hilfe des Rades 9 kann die Stütze 5 auf dem Erdboden bewegt werden. Dabei dreht sich der Mast 3 um ein Gelenk 12 um seine Achse. Ein wesentlicher Teil der Erfindung ist die Tatsache, dass die Stütze 5 Kräfte aufnimmt, die durch die Gewichtskraft der Last 8 in die Traverse 4 eingeleitet werden. Dadurch werden der Mast 3 und die Traverse 4 deutlich entlastet. Entsprechend filigraner und leichter können Mast 3 und Traverse 4 gebaut werden. Dadurch dass die Traverse 4 mit dem Mast 3 über ein Gelenk 12 verbunden ist, wird kein Kippmoment in das Fahrgestell des Anhängers 1 geleitet. Auch das Fahrgestell des Anhängers 1 kann deswegen leichter und filigraner gebaut werden.

Das Ausschieben des Mastes 3, der Traverse 4, der Stütze 5 und das Drehen des Mastes 3 um seine Achse kann manuell (z. B. über eine Handseilwinde, durch händisches herausziehen oder ablassen oder motorisch über einen Elektromotor, Hydraulikzylinder, Hydraulikmotor, Verbrennungsmotor, Pneumatikzylinder oder Druckluftmotor erfolgen. Zur Verriegelung der teleskopischen Verlängerungsteile können Sperrbolzen, Schrauben, Rastzapfen oder ähnliches verwendet werden. Eine vereinfachte Ausführung des Ladekrans 18 ist, wenn auf das Ausschieben der Traverse 4, der Stütze 5 oder des Mastes 3 verzichtet wird, d.h. wenn diese starr ausgeführt werden. Das Rad 9 an der Stütze 5 kann ebenfalls auf die bereits aufgeführten Arten motorisch angetrieben werden. Auch ein manueller Antrieb ist denkbar. Auch ist es denkbar, dass das Rad 9 entfällt.

Vorteilhafterweise können die tragenden Teile, wie Mast 3, Traverse 4 oder Stütze 5 als Stabtragwerk bzw. Gittermastkonstruktion (Stahl, Alu, Holz, etc...) ausgeführt werden. Vorteilhaft ist die Verwendung von leichten und trotzdem stabilen Werkstoffen (z. B. Aluminium). Die Verwendung von leichten und stabilen Aluminium Gittermastkonstruktionen ist in der Veranstaltungstechnik gebräuchlich (sogenannte "Alu-Traversen oder engl. Truss). Anbieter von solchen Traversen sind beispielsweise die Firmen: Global Truss, Alutruss, Eurotruss, Astralite, Litestructures, Expotruss, etc.. Des weiteren ist denkbar, dass die tragenden Teile aus Rund- oder Rechteckmaterial, beispielsweise aus teleskopierbaren Rohren zusammengesetzt sind, bzw. dass Mischungen der vorgenanten Ausführungen verwendet werden. Dabei können jeweils zwei, drei oder mehrere Teleskopglieder vorgesehen sein. Das teleskopische Ein- und Ausfahren kann händisch, über einen mechanisch gekoppelten Motor oder nach Prinzip eines Hydraulik- oder Pneumatikzylinders erfolgen.

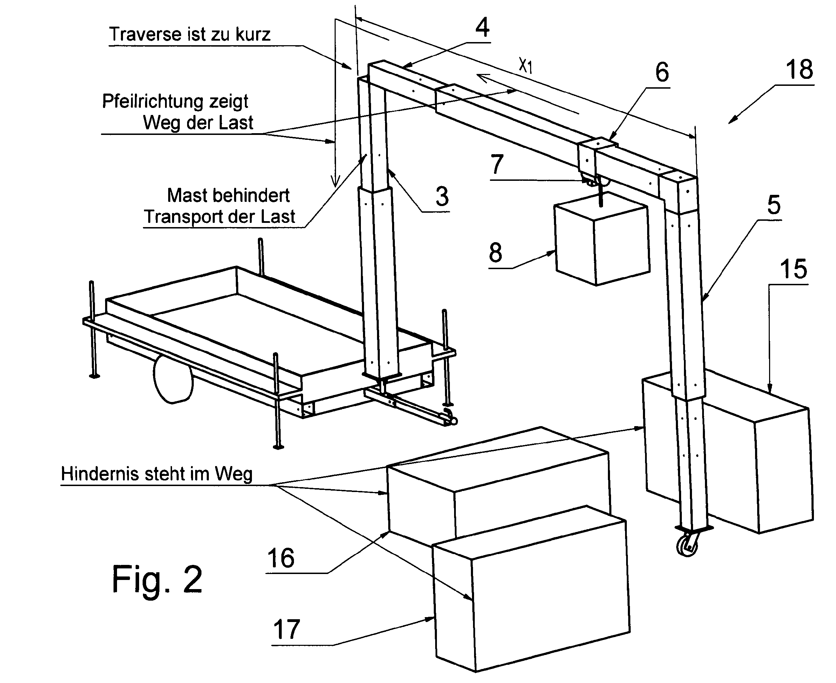

Fig. 2 zeigt ein Beladungsszenario mit Hindernisse 15, 16, 17, die es zunächst zu umfahren gilt, da der Lastkran 18 im Gegensatz zu den üblichen Ladekranen unter Last nicht flurfrei arbeiten kann, weil eine Stütze 5 benötigt wird. Die Last 8 kann nicht auf der Ladefläche 2 des Anhängers 1 abgelegt werden, da der Mast 3 im Wege ist und außerdem die Traverse 4 zu kurz ist. Die Traverse 4 ist zwar um den Mast 3 drehbar gelagert, aber die kastenförmigen Gegenstände 15, 16 und 17 sind im Weg. Sie verhindern, dass das Rad 9 das an die Stütze 5 montiert ist über den Boden rollen kann. Die eingezeichneten Pfeile zeigen den Weg, den die Last 8 nehmen müsste um auf die Ladefläche 2 des Anhängers zu gelangen.

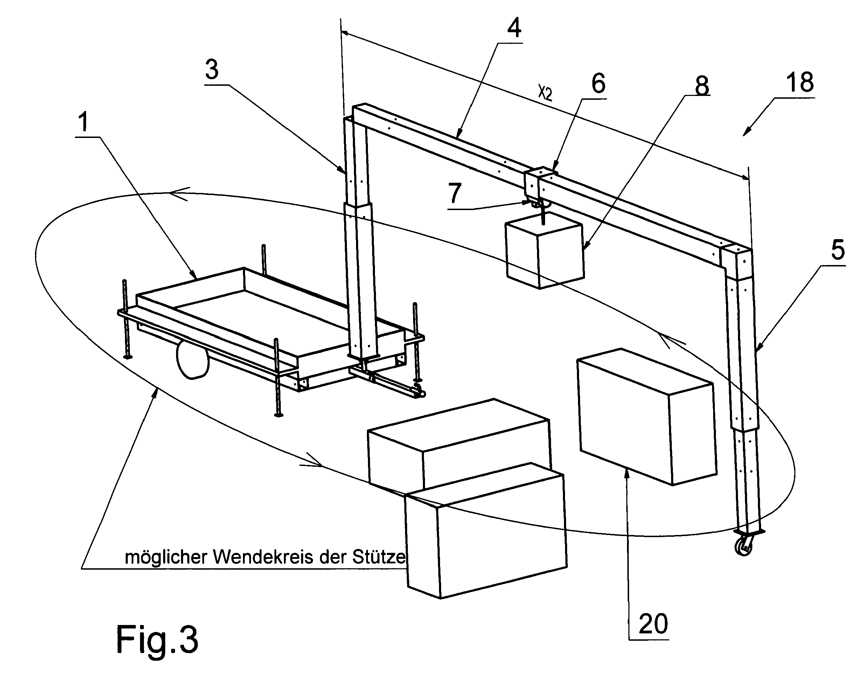

Fig. 3 zeigt wie die Last 8 entlang eines ellipsenförmigen Beladungsweges auf den Anhänger 1 verlanden werden kann. Die Traverse 4 wurde zunächst ausgeschoben. Damit wird das Maß X1 in Fig. 2 auf das Maß X2 Fig.3 vergrößert. Die Stütze 5 kann nun an dem Gegenstand 15 vorbeigefahren werden, da dieser nun nicht mehr im Weg ist.

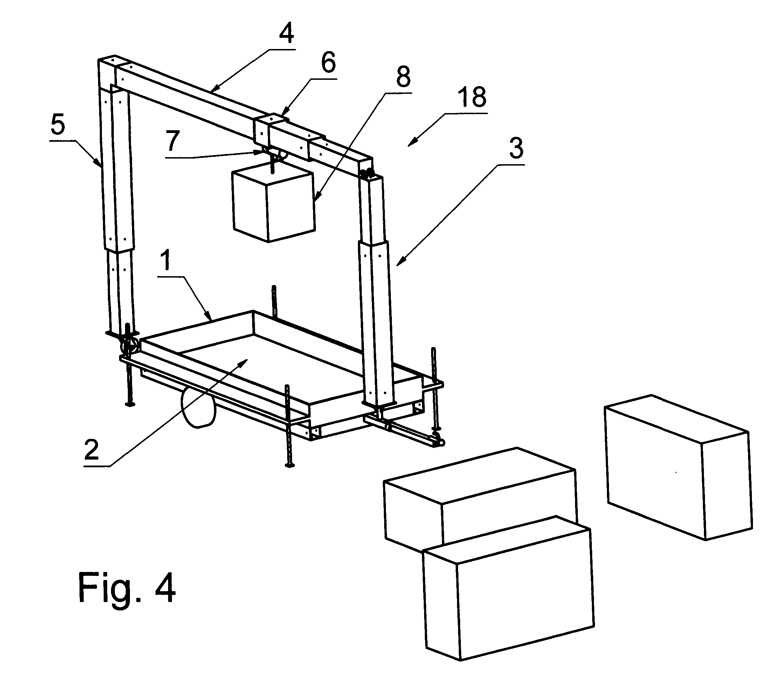

Fig.4 zeigt, wie die Ladekran (Traverse 4, Mast 3, Stütze 5) um die Achse des Mastes 3 entlang des Wendekreise (siehe Fig.3) gedreht wurde. Die Stütze 5 befindet sich jetzt hinter dem der Ladefläche 2 des Anhängers. Die Last 8 befindet sich nun über der Ladefläche 2 und kann auf sie herabgelassen und abtransportiert werden.

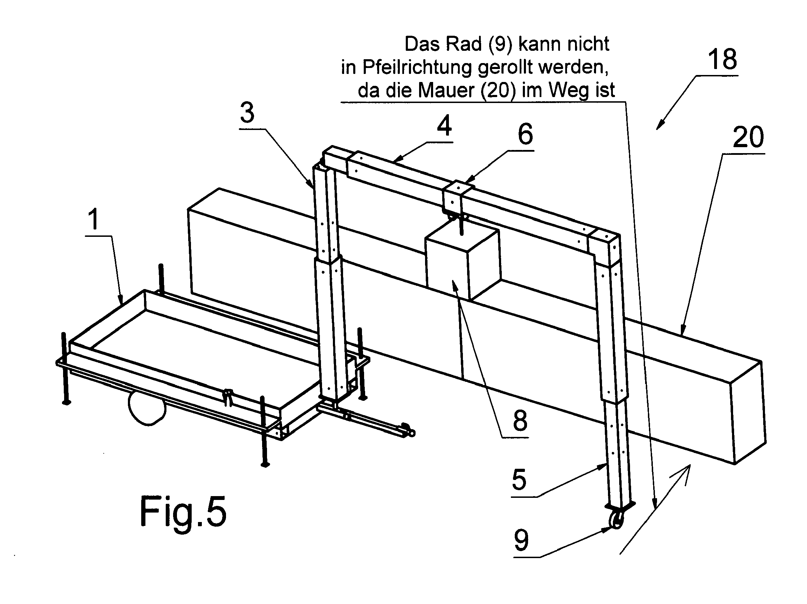

Fig. 5 zeigt ein weiteres Beladungsszenario. Eine langgezogene Mauer 20 verhindert, dass die Stütze 3, an der ein Rad 9 montiert ist, hinter die Ladefläche 2 des Anhängers 1 (wie in Fig. 4 abgebildet) gerollt werden kann. Die Mauer 20 könnte auch ein anderes Hindernis sein, z. B. ein tiefer Graben. Auch das Ausziehen der Traverse 4 bringt keine Lösung für die Beladung, da die Traverse 4 bereits bis zum maximal möglichen Maß ausgeschoben wurde. Auch bei maximalem Ausschieben kommt sie nicht an der Mauer 20 vorbei gefahren werden. Auch das Einschieben auf die minimal mögliche Länge der Traverse 4 bringt nicht die Lösung.

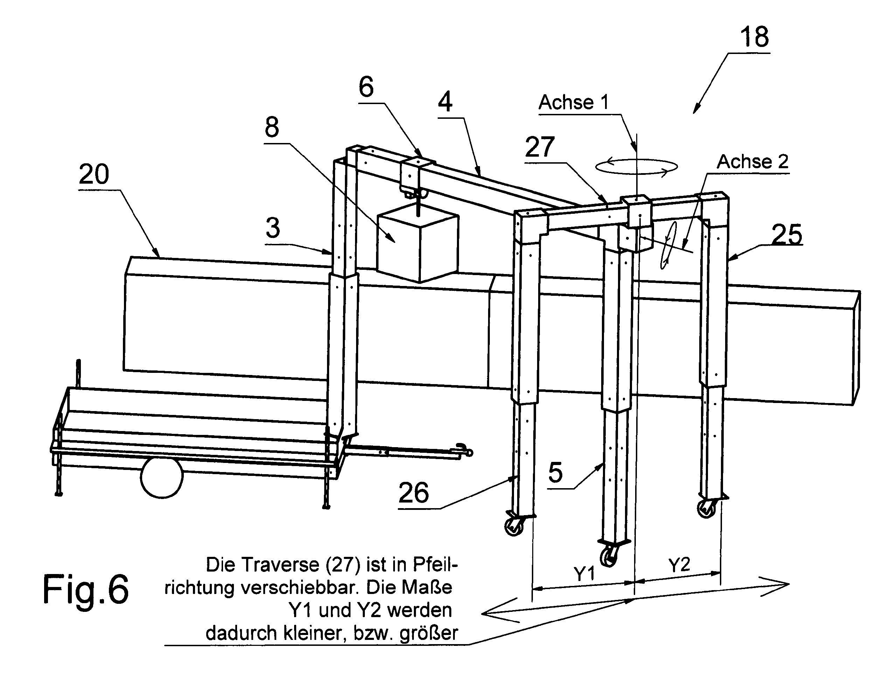

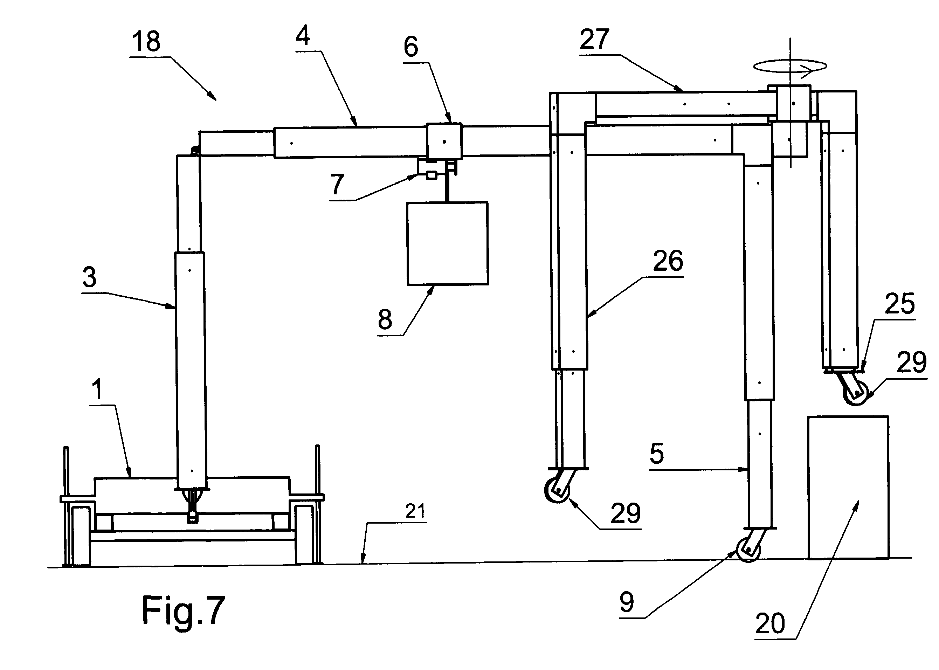

Fig. 6 zeigt ein weiteres Ausführungsbeispiel eines Ladekrans 18 zur Lösung des Problems mit der Mauer 20. Am Ende der Traverse 4 ist eine weitere Traverse 27 montiert. An der Traverse 27 wiederum sind weitere Stützen 25 und 26 mit jeweils endseitigen Rädern 29 montiert. Die Traverse 27 mit den an ihr montierten Stützen 25 und 26 sind um die Achse 1 vertikal rotierbar. Vorteilhaft können im Weg befindliche Hindernisse wie die Mauer 20 umgangen werden. Weiterhin ist die Traverse 27 um die Achse 2 horizontal drehbar. Vorteilhaft können somit Bodenunebenheiten ausgeglichen werden. Eine Frontdarstellung des Ladekrans 18 zeigt Fig. 7.

Fig.7 stellt dar, wie die langgezogene Mauer 20 von den Stützen überwunden werden kann. Die Traverse 4 wird ausgeschoben bis sie kurz vor der Mauer 20 steht. Anschließend wird die Stütze 25 eingeschoben, so dass das erste Rad 29 sich über der Mauer 20 befindet.

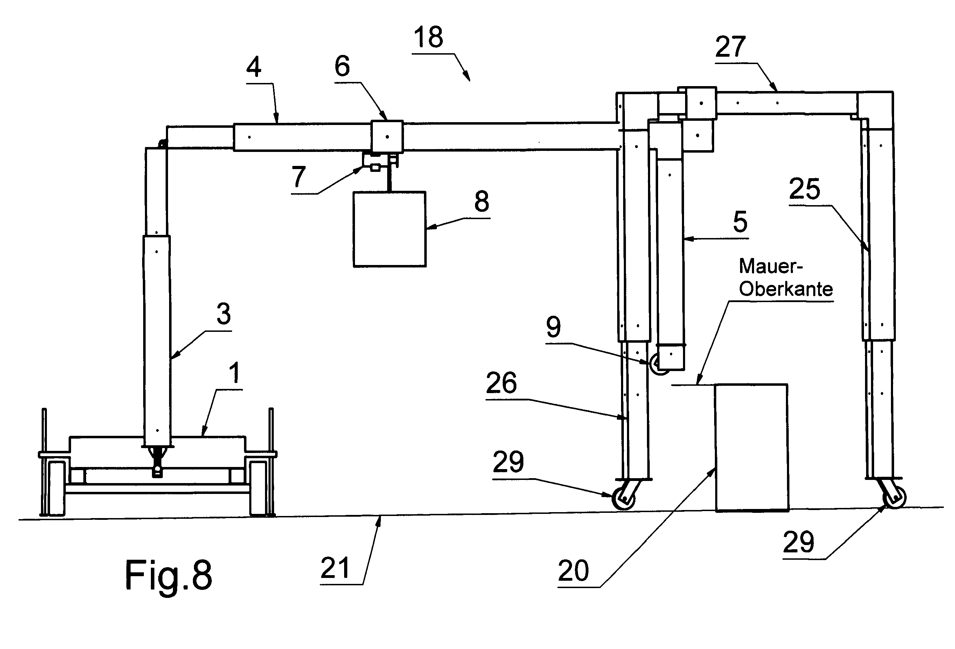

Fig. 8 zeigt den nächsten Schritt. Die Traverse 27 wird nach rechts verschoben und die Stütze 25 und 26 auf den Boden gesetzt und die Stütze 4 hochgeschoben, so dass sich das Rad 9 über der Oberkante der Mauer 20 befindet.

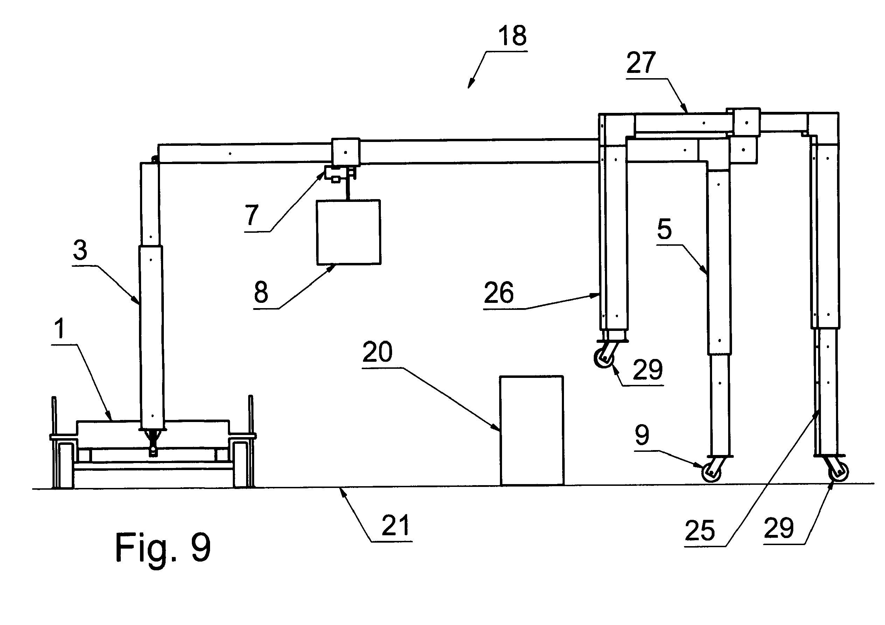

Fig.9 zeigt das weitere Vorgehen. Die Stützen 5 und 25 befinden sich nun rechts von der Mauer 20 abgestützt auf dem Erdboden 21. Man erkennt, dass sich alle drei Stützen 6, 25 und 26 jetzt rechts von der Mauer 20 befinden, d.h. diese überwunden haben. In Fig.6 erkennt man hingegen, wie sich alle drei Stützen 5, 25, 26 noch links vor der Mauer 20 befunden haben.

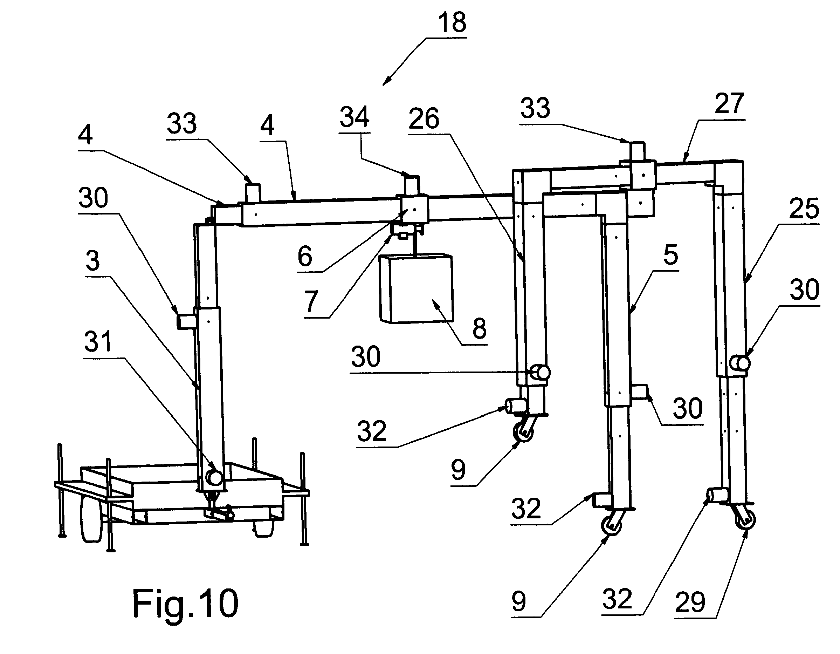

Fig. 10 zeigt ein weiteres Ausführungsbeispiel, dass sich an dem in Fig. 6 gezeigten orientiert, bei der allerdings die Bewegungen durch Motore 30 bis 33 ausgeführt werden. Dabei können einzelne Bewegungen auch manuell erfolgen. Viele Kombinationen sind denkbar (zum Bsp. Nur Hubbewegungen motorisch, restliche Bewegungen manuell, etc....).

Die Motore 30 dienen zum Ein- und Ausfahren der Stützen 5, 25 und 26. Motor 31 dient zum Drehen des Mastes 3 um seine Längsachse. Die Motore 32 werden zum Antreiben der Räder 9, 29 benötigt. Mittels der Motore 33 können die Traversen 4, 27 ausgeschoben, bzw. in horizontaler Richtung bewegt und verdreht werden. Es kann sich bei den Motoren 30 bis 33 um Elektromotore, Brennstoffmotoren, Hydraulikmotore, Hydraulikzylinder, Pneumatikmotore. Pneumatikzylinder oder sonstige Motore handeln. Vorteilhaft ist der Betrieb der Elektromotore über Akkus oder über mobile Stromerzeuger (z.B. mit Verbrennungsmotor), die elektrische Energie kann auch über ein Stromgenerator eines Führungsfahrzeuges oder des Anhängers 1 bezogen werden.

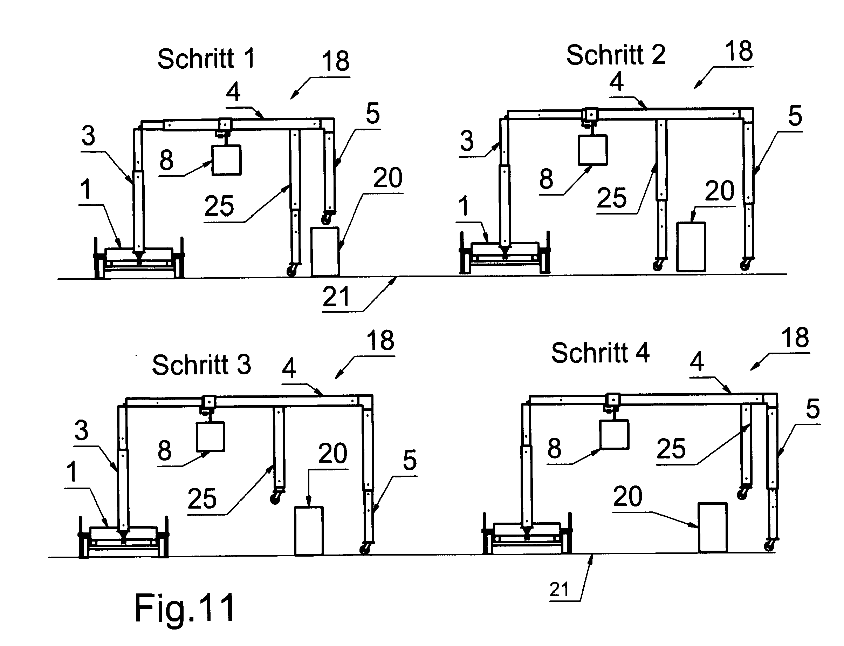

Fig.11 zeigt einen vereinfachten Ladekran 18 gegenüber dem Ausführungsbeispiel der Figuren 6 bis 8. Dieser umfasst zwei Stützen 5 und 25. Schritt 1 zeigt die Stütze 5 in eingezogenem Zustand, die sich über der Mauer 20 befindet. Das Eigengewicht der Traverse 4 und das Gewicht der Last 8 wird alleine von der Stütze 25 getragen. Schritt 2 zeigt die Stütze 5 rechts von der Mauer 20 am Boden abgestellt. Beide Traversen 5, 25 tragen die Last 8 und das Gewicht der Traverse 4 zusammen mit Mast 3. In Schritt 3 ist die Stütze 25 hochgezogen. Stütze 5 trägt nun die Lasten. Schritt 4 zeigt beide Stützen 4 und 25 rechts von der Mauer 20. Das Ziel, die Mauer 20 mit den Stützen 5 und 25 zu überwinden ist erreicht. Die Stütze 25 kann an dem stützenseitigen Ende der Traverse 4 fest mit der Traverse 4 verbunden sein, verschieblich und/oder verdrehbar an der Traverse 4 oder an der Stütze 5 befestigt sein.

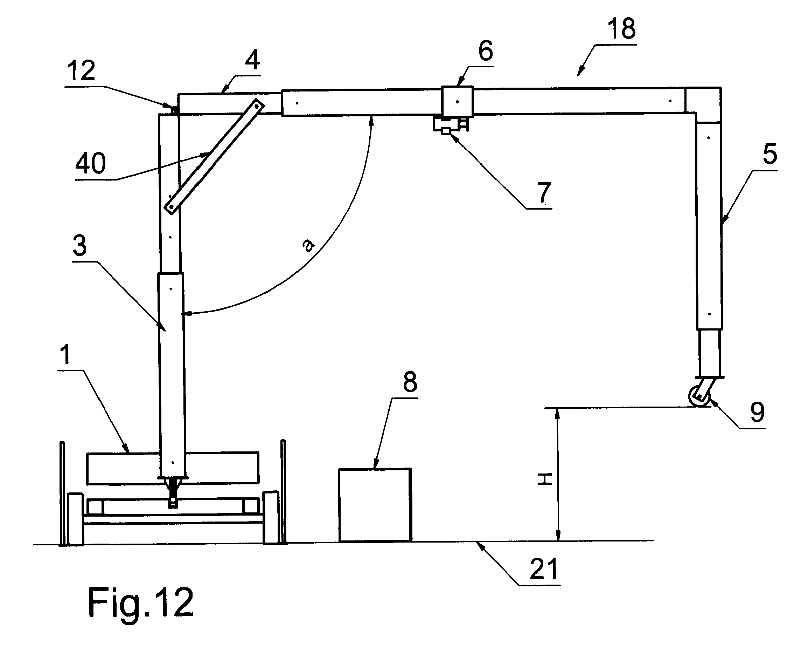

Fig.12 zeigt ein weiteres Ausführungsbeispiel eines Ladekranes 18, bei der der Mast 3 und die Traverse 4 zusätzlich zu dem Gelenk 12 noch mit einer Strebe 40 zur Versteifung verbunden wurden. Das führt dazu, dass der Winkel a zwischen Mast 3 und Traverse 4 unveränderlich fixiert ist. Die Stütze 5 kann somit eingezogen und vom Erdboden hochgehoben werden (Abstand zum Erdboden = Maß H). Die frei schwebende Traverse 4 hat den Vorteil, dass die Stütze 5 zunächst flurfrei an die vorgesehene Position bewegt werden kann. Dabei ist die Traverse 4 nur durch ihr Eigengewicht, das Eigengewicht der Seilwinde 7 und der Stütze 5 belastet, jedoch noch nicht durch eine an der Seilwinde 7 anhängbare Last 8. Die Strebe 40 ist vorteilhaft derart dimensioniert, dass sie das Eigengewicht von Traverse 4, Stütze 5 und Winde 7 auch bei voll ausgefahrener Traverse 4 stützen kann. Die Last 8 liegt zunächst abgehängt am Boden. Die Flurfreiheit beschleunigt und vereinfacht die Positionierung der Stütze 5. Damit der Vorteil, der mit der Erfindung erreicht werden soll, nämlich dass Mast 3, Traverse 4, Stütze 5 und Fahrgestell des Fahrzeugs 1 filigran gebaut werden können nicht wieder verloren geht, wird vorgeschlagen, die Eigengewichte von Mast 3, Traverse 4, Stütze 5, Rad 9 durch geeignete Werkstoffe (z.B. Aluminium, etc...) oder durch Leichtbaustrukturen (z.B. Fachwerk) gering zu halten. Während der flurfreien Positionierung der Stütze 5 soll sich auch die zu befördernde Last 8 nicht am Haken der Seilwinde befinden (wie schon angesprochen), da sich sonst das Kippmoment stark erhöht. Der Anhänger 1 samt Ladekran 18 könnte ansonsten umkippen.

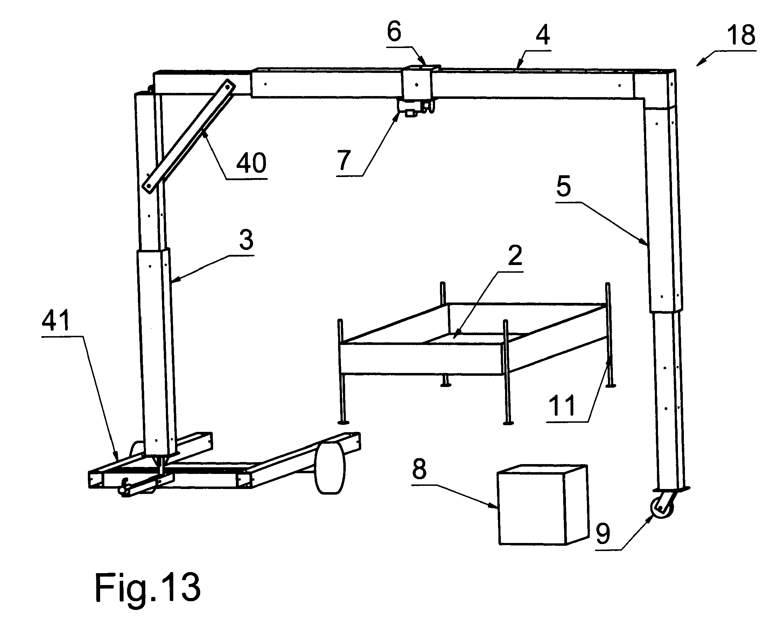

Fig.13 zeigt eine Ladefläche 2, die auf den Stützbeinen 11 ruht und sich gegen den Erdboden abstützt. Das Chassis des Anhängers 41 wurde unter der Ladefläche 2 getrennt. Am Chassis ist ein in Fig. 12 dargestellter Ladekran 18 angeordnet

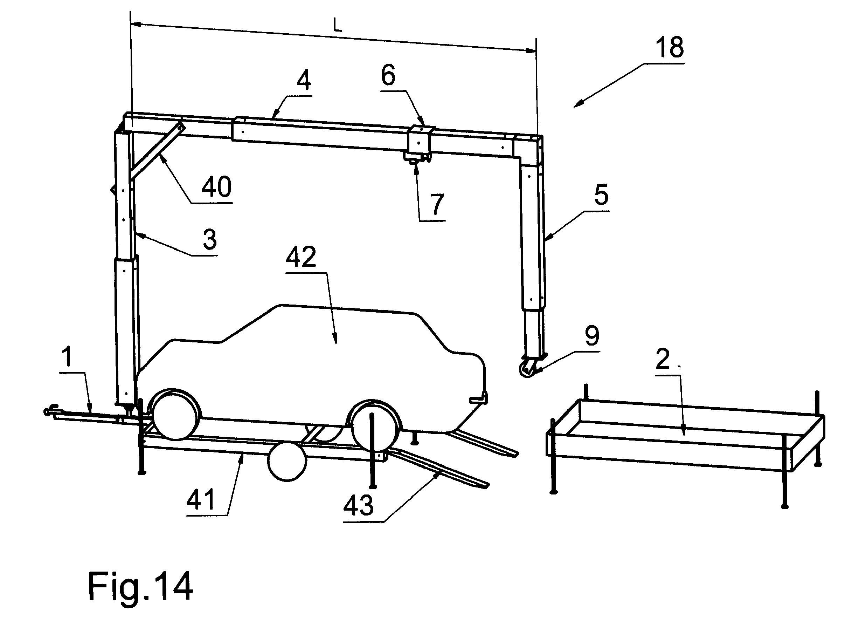

Davon ausgehend zeigt Fig.14 ein Fahrzeug 42 als Beschwerungslast, z.B. PKW, etc. auf dem Anhänger 1, der auf dem Chassis 41 des Anhängers 1 steht. Das Fahrzeug 42 wurde über Auffahrrampen 43 auf das Chassis des Fahrzeugs 1 gefahren. Das Gewicht des Fahrzeugs 42 erzeugt ein höheres Standmoment des Anhängers als wenn der Anhänger unbelastet wäre, wie in Fig.12. Dadurch kann die Länge L der Traverse größer dimensioniert werden, vor allem wenn die Stütze angehoben ist (d.h. sie berührt den Erdboden nicht und ein hohes Kippmoment entsteht. Die seitliche Reichweite des Ladekrans wird dadurch größer. Statt Auffahrrampen zu verwenden, kann das Fahrzeug 42 auch dadurch auf das Chassis gelangen, indem das Chassis unter das Fahrzeug 42 geschoben wird. Anschließend wird das Chassis mit dem darüber befindlichen Fahrzeug angehoben mittels eines nicht dargestellten Hebemechanismus (z.B. Wagenheber).

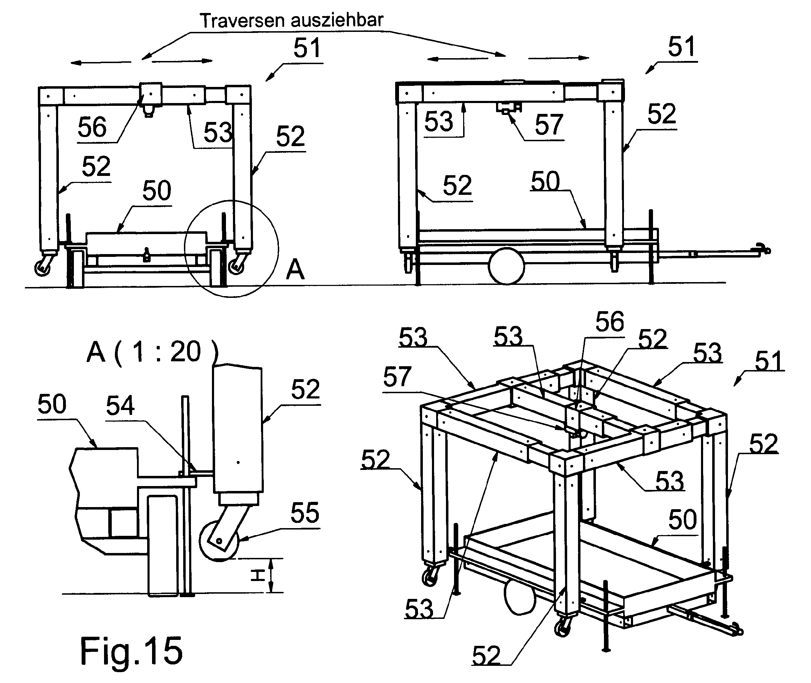

Fig.15 zeigt einen Anhänger 50. An den Anhänger 50 angebaut ist ein Portalkran 51. Das kennzeichnende Merkmal eines Portalkrans ist, dass er seinen Arbeitsbereich wie ein Portal überspannt. Die Hauptbestandteile des Portalkrans 51 sind vier Stützen 52, fünf Traversen 53, Laufkatze 56 und eine Seilwind 57. Es können prinzipiell auch weniger Stützen 52 verwendet werden, z. B. zwei oder drei, sofern die Stabilität des Portalkrans 51 ausreicht. Bei zwei Stützen 52 spricht man auch von einem "Bockkran" oder "Brückenkran". Die Stützen 52 des Portalkrans 51 sind vom Boden abgehoben um das Maß H. Die Räder 55 hängen in der Luft, siehe Einzelheit A, wobei die Stützen 52 des Portalkrans 51 mittels Halter 54 am Anhänger 1 befestigt sind. Das Gewicht des Portalkrans 51 ruht auf dem Anhänger 50. Die Gewichtskraft des Portalkrans 51 wird über an den Stützen 52 befindliche Halter 54 in das Chassis des Anhängers 50 eingeleitet.

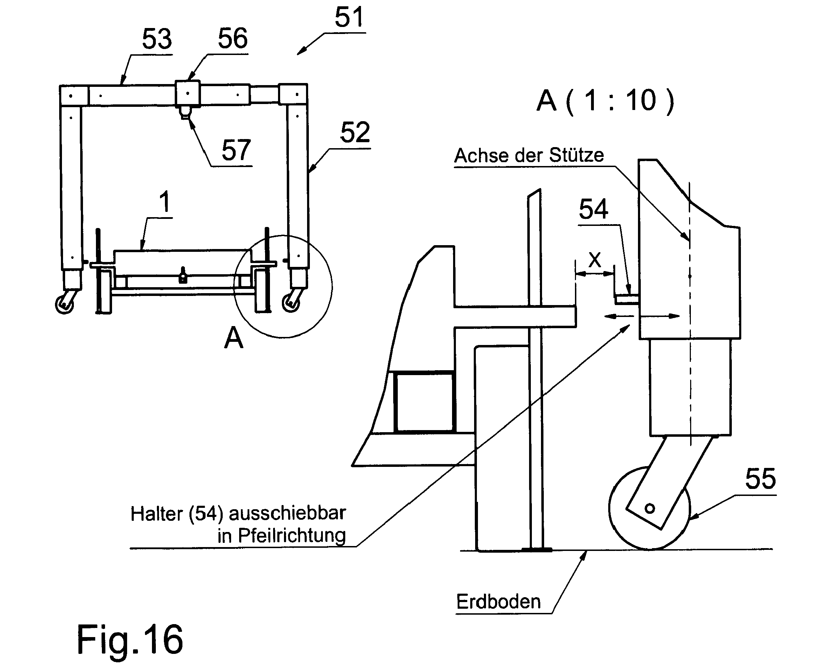

Fig.16 zeigt wie der Portalkran 51 vom Anhänger 50 abmontiert werden kann. Dies geschieht dadurch, dass die Räder 55 auf den Boden abgelassen werden und die horizontal verschiebbaren Halter 54 nach rechts geschoben werden, so dass eine Lücke entsteht (Maß X). Der Ladekran 51 ist nun vom Anhänger 50 abmontiert und kann weggefahren werden. Die Demontage des Portalkrans 51 geschieht prinzipiell dadurch dass sich der Portalkran 51 und der Anhänger 50 relativ auf einander zu bewegen. Wer sich auf wen zu bewegt (Anhänger auf Portalkran oder umgekehrt) ist dabei beliebig. So wäre es auch denkbar, dass am Anhänger 50 eine Hebevorrichtung montiert ist, die den Portalkran 51 vom Boden abhebt. Der Portalkran könnte auch über Auffahrrampen 43, siehe Fig. 14, auf den Anhänger 50 gelangen.

Allgemein ist es wichtig, dass der Ladekran 18 (Portalkran 51 oder sonstige Ausführung des Krans) leicht ist, wie bereits angesprochen, und soweit zusammengeschoben werden kann, dass die zulässigen Abmessungen (Länge, Breite, Höhe) des Fahrzeugs mit Anhänger 50 laut Straßenverkehrsordnung nicht überschritten werden. In der Fig.16 steht das Rad 55 übrigens quer zur Fahrtrichtung. Da es aber um die Achse der Stütze 52 drehbar gelagert ist, kann es leicht in die gewünschte Fahrtrichtung gedreht werden.

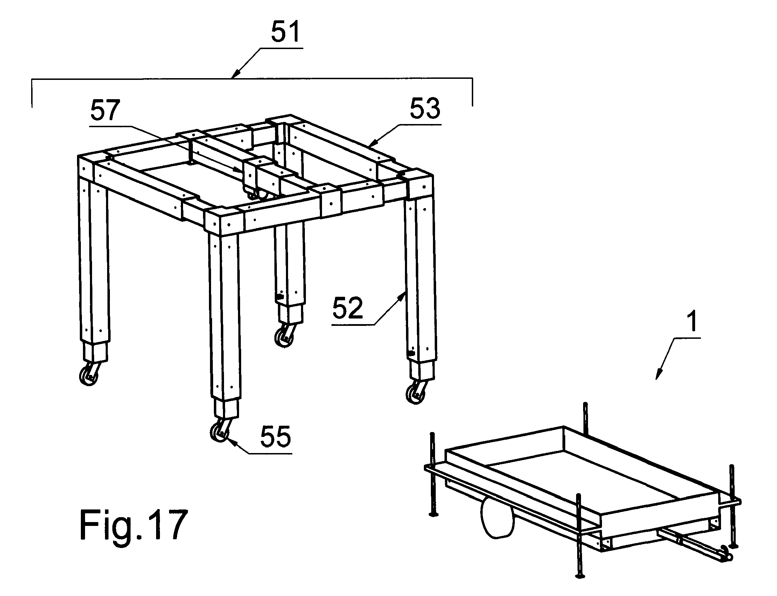

Fig.17 zeigt einen von Anhänger 1 abmontierten und weggeschobenen Portalkran 51. Der Portalkran 51 und der Anhänger 1 erfüllen im Zusammenwirken die Funktion eines Fahrzeugs mit Ladekran 18 gemäß dem Leitgedanken der Erfindung. Der Portalkran 51 kann leicht und filigran gebaut werden, wie schon erwähnt, da sich die Belastung durch sein Eigengewicht und eine an der Seilwinde 57 angehängte Last 8 durch Stützen 52 abgefangen wird. Besonderer Vorteil der Portalkran - Lösung gemäß Fig. 15 bis 17 ist, dass die seitliche Reichweite theoretisch unendlich ist, d.h. die zu befördernde Last 8 kann sich beliebig weit vom Anhänger 1 entfernt befinden, da der Portalkran 51 selbstbeweglich ist.

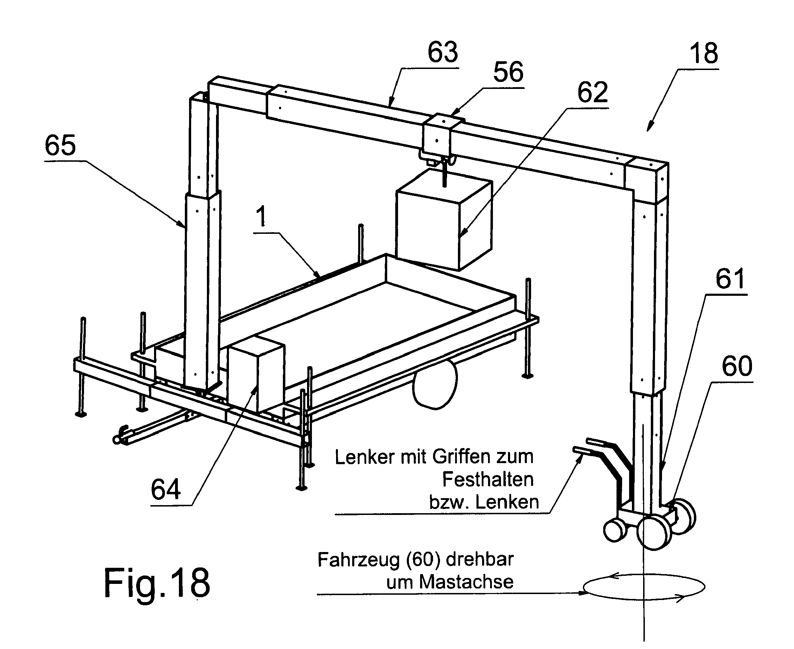

Fig.18 zeigt ein Ausführungsbeispiel eines Ladekrans 18, der an dem in Fig. 1 dargestellten Ausführungsbeispiel angelehnt ist. Am bodenseitigen Ende der Stütze 61 ist einen motorisiertes Fahrzeug 60 montiert, wobei beispielsweise auch ein stützenseitige Rad 9 in das Fahrzeug 60 aufgenommen sein kann. Das Fahrzeug 60 könnte zum Beispiel eine Motorschubkarre sein. Mit Hilfe der Motorschubkarre kann die Stütze auf dem Boden verfahren werden. Dies ist besonders vorteilhaft wenn eine schwere Last 62 an der Traverse 63 hängt, da die Stütze 5 motorisch und nicht durch Muskelkraft bewegt werden kann. Auch bei einer Geländesteigung vereinfacht der motorische Antrieb das Verfahren der Stütze 5. Der Motor des Fahrzeugs 60 kann ein Verbrennungs-, Elektro-, Hydraulik-, Pneumatik- oder sonstiger Motor sein und kann seine Energiezuführung über den Ladekran 18 oder über das Fahrzeug 1 erhalten. Der Elektromotor kann mittels Akku betrieben werden. Dargestellt ist weiterhin ein Stromgenerator 64. Dieser kann eventuell zur Erzeugung der notwendigen Bewegungen vorhandene Elektromotore (nicht dargestellt) mit Energie versorgen. Von Vorteil ist außerdem, dass das Fahrzeug 60 um den Mast 65 drehbar ist (z. B. 360°), weil auch die Traverse 63 ein- oder ausgeschoben werden kann, wenn sich das Fahrzeug 60 in Richtung auf den Mast 65 bewegt. Ein nicht drehbares Fahrzeug 60, dessen Fahrtrichtung zum Beispiel immer im rechten Winkel zur Traverse 63 verlaufen würde, könnte die Stütze 61 nur um dem Mast 65 drehen, nicht aber die Traverse 63 ein- oder ausschieben. Das Fahrzeug 60 könnte auch mit einem Raupenfahrwerk ausgestattet sein. Dies hätte Vorteil in einem unwegsamen Gelände. Denkbar wäre es dass das Fahrzeug 60 ferngesteuert werden könnte. Es könnte auch motorisch gelenkt werden, d.h. der Lenker mit den Griffen könnte entfallen.

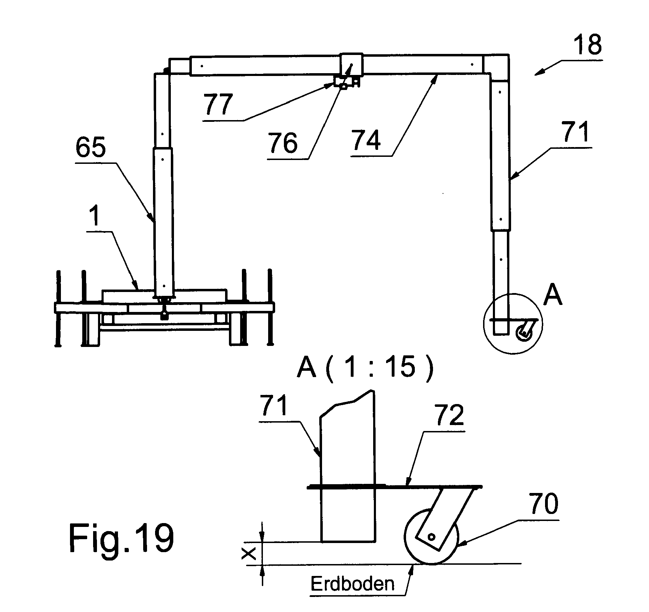

Fig.19 zeigt ein weiteres Ausführungsbeispiel eines Ladekrans 18, der grundsätzlich auf der in Fig. 1 dargestellten Ausführung beruht, und am stützenseitigen Ende ein federnd gelagertes Rad 70 umfasst. Das Rad 70 ist über ein federndes Element 72 mit der Stütze 71 verbunden. Das federnde Element 72 könnte, wie dargestellt, eine Blattfeder sein. Die Figur 18 zeigt die Feder 72 in wenig belasteten Zustand, d.h. auf die Feder 72 ruht nur das Eigengewicht von Traverse 74, Stütze 71, Laufkatze 76 und Seilwinde 77. An der Seilwinde 77 hängt keine Last. Vorteil des federnden Elements 72 ist, dass im unbelasteten Zustand die Stütze verfahren werden kann.

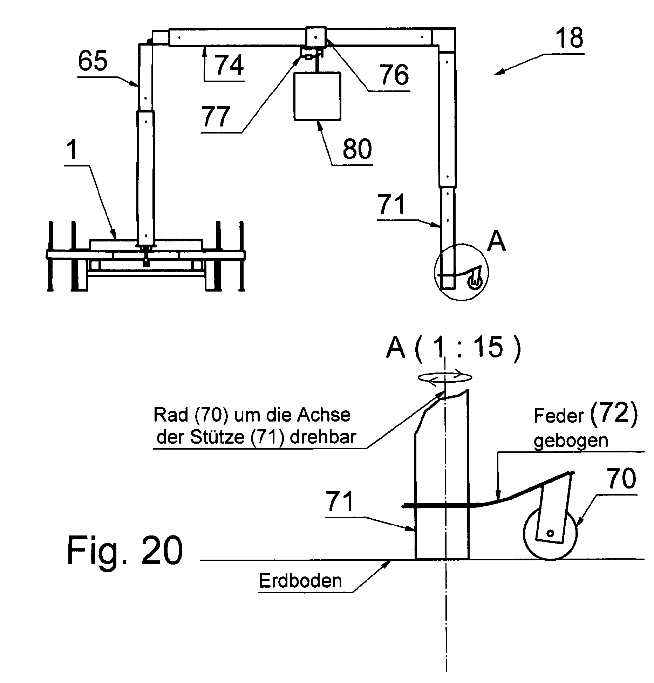

Fig.20 zeigt das Ausführungsbeispiel der Fig.19 mit angehängter Last 80. Die Last 80 hängt an der Seilwinde 77. Durch das zusätzliche Gewicht der Last 80 wird das federnde Element 72 verbogen, so dass die Stütze 71 den Boden berührt. Vorteilhaft wird das Rad 70 nicht überlastet und bei angehängtem Zustand kann die Stütze 71 nicht unkontrolliert wegrollen und einen Unfall verursachen. Die Reibungskraft zwischen Erdboden und Stütze 71 verhindert das Wegrollen. Die Feder 72 muss so ausgelegt sein, dass sie nur elastisch verformt wird, d.h. in unbelasteten Zustand wieder ihre ursprüngliche Form annimmt.

### Bezugszeichenliste

- 1: Fahrzeug / Anhänger
- 2: Ladefläche
- 3: Mast
- 4: Traverse
- 5: Stütze
- 6: Laufkatze
- 7: Seilwinde
- 8: Last
- 9: Rad
- 10: Deichsel
- 11: Stützbeine
- 12: Gelenk
- 13: Träger
- 14: Stützbeine
- 15: Hindernisgegenstände
- 16: Hindernisgegenstände
- 17: Hindernisgegenstände
- 18: Ladekran
- 19 20: Mauer
- 21: Erdboden
- 22 23 24 25: Weitere Stütze
- 26: Weitere Stütze
- 27: Weitere Traverse
- 28 29: Rad
- 30: Motor
- 31: Motor
- 32: Motor
- 33: Motor
- 34 35 36 37 38 39 40: Strebe
- 41: Anhänger
- 42: Fahrzeug als Anhängerbeschwerung
- 43 44 45 46 47 48 49 50: Anhänger
- 51: Portalkran
- 52: Stütze
- 53: Traverse
- 54: Halter
- 55: Rad
- 56: Laufkatze
- 57: Seilwinde
- 58 59 60: Motorfahrzeug
- 61: Stütze
- 62: Last
- 63: Traverse
- 64: Stromgenerator
- 65: Mast
- 66 67 68 69 70: Rad
- 71: Stütze
- 72: federndes Element
- 73 74: Traverse
- 75 76: Laufkatze
- 77: Seilwinde
- 78 79 80: Last

## Patentansprüche

1. Ladekran (18, 51) für ein Fahrzeug oder Anhänger (1), umfassend zumindest eine Traverse (4, 53, 63, 74) und eine an der Traverse (4, 53, 63, 74) befestigte und vom Fahrzeug bzw. Anhänger (1) wegweisende Stütze (5, 52, 61, 71), wobei an der Traverse (4, 53, 63, 74) eine Laufkatze (6, 56, 76) mit Seilwinde (7, 57, 64) zur Aufnahme einer Last (8, 62, 80) längsverschieblich angeordnet ist und die Stütze (5, 52, 61, 71) flurfrei auf dem Erdboden (21) zur endseitigen Abstützung der Traverse (4, 53, 63, 74) absetzbar ist.

2. Ladekran (18) nach Anspruch 1, wobei anhänger- bzw. fahrzeugseitig die Traverse (4, 63, 74) durch einen Mast (3, 65), insbesondere einen um seine Längsachse verdrehbaren Mast (3, 65) abstützbar ist, wobei bevorzugt der Mast (3, 65) lösbar, insbesondere werkzeugfrei mit dem Fahrzeug koppelbar ist.

3. Ladekran nach Anspruch 1, wobei zwischen Mast (3, 65) und Traverse (4, 63, 74) zumindest eine Strebe (40) angeordnet ist, wodurch die Traverse (4, 63, 74) mit Stütze (5, 52, 61, 71) gegenüber dem Mast (3, 65) flurfrei in einem Winkel a, bevorzugt a=90° abstützbar ist.

4. Ladekran (51) nach Anspruch 1, wobei die Traverse (53) durch flurfrei absetzbare Stützen (52) allseitig abstützbar ist, so dass ein Portalkran (51) realisierbar ist, und bevorzugt die Stützen (52) im flurfreien Zustand mittels Halter (54) an dem Fahrzeug bzw. Anhänger (1) befestigbar sind.

5. Ladekran nach Anspruch 4, wobei der Portalkran (51) vier endseitig miteinander verbundene Traversen (53) zur Ausbildung eines Traversenrechtecks umfasst, die durch vier eckseitig angeordnete Stützen (52) am Boden (21) abstützbar sind, wobei zwei parallele Traversen (53) mittels einer querverschieblichen weiteren Traverse (53) verbunden sind, und die weitere Traverse (53) eine Laufkatze (56) mit Seilwinde (57) umfasst.

6. Ladekran nach einem der vorgenannten Ansprüche, wobei Mast (3, 65), Stütze (5, 52, 61, 71) und/oder Traverse (4, 53, 63, 74) längsveränderlich, insbesondere ausschiebbar oder teleskopierbar sind.

7. Ladekran nach einem der vorgenannten Ansprüche, umfassend zumindest einen Motor (30, 31, 32, 33), insbesondere einen Elektro- Hydraulik - oder Pneumatikmotor, bevorzugt fahrzeug- bzw. anhängergespeisten Motor, wobei der Motor (30, 31, 32, 33) zur Längenveränderung der Stütze (5, 52, 61, 71), des Mastes (3, 65), der Traverse (4, 53, 63, 74), zur Längsachsenrotation des Mastes (3, 65), Antrieb zumindest eines Rades (9, 29) und/oder der Laufkatze (6,56, 76) und Seilwinde (7, 57, 64) eingerichtet ist.

8. Ladekran nach einem der vorgenannten Ansprüche, wobei Mast (3, 65), Stütze (5, 52, 61, 71) und/oder Traverse (4, 53, 63, 74) röhrenförmig, insbesondere mit runden oder rechteckigen Rohrprofil oder durch ein Stabtragwerk oder einer Gittermastkonstruktion ausgebildet ist.

9. Ladekran nach einem der vorgenannten Ansprüche, wobei zwischen Mast (3, 65) und Traverse (4, 53, 63, 74) und/oder zwischen Stütze (5, 52, 61, 71) und Traverse (4, 53, 63, 74) zumindest ein Gelenk (12) zur winkelvariablen Abstützung mit einstellbaren Winkel a angeordnet ist.

10. Ladekran nach einem der vorgenannten Ansprüche, wobei am bodenseitigen Ende der Stütze ein Rad (9, 29) insbesondere eine Lenkrolle angeordnet ist.

11. Ladekran nach einem der vorgenannten Ansprüche, wobei an dem vom Fahrzeug bzw. Anhänger (1) wegweisenden traversenseitigen Ende der Traverse (4, 53, 63, 74) zumindest eine weitere Stütze (25, 26) angeordnet ist, insbesondere eine weitere Traverse (27) mit zumindest einer daran angeordneten weiteren Stütze (25, 26) angeordnet ist, wobei bevorzugt die weitere Traverse (27) gegenüber der Traverse (4, 53, 63, 74) horizontal und/oder vertikal verschwenkbar ist.

12. Ladekran nach Anspruch 11, wobei die weitere Traverse (27) längenveränderlich ist und/oder die weitere Traverse gegenüber dem Befestigungspunkt mit der Traverse (4, 53, 63, 74) positions und/oder längsverschieblich ist.

13. Fahrzeug bzw. Anhänger 1 umfassend einen Ladekran (18, 51) nach einem der vorgenannten Ansprüche.

14. Fahrzeug bzw. Anhänger 1 nach Anspruch 13, wobei ein Belastungsfahzeug (42) insbesondere ein PKW zur Erhöhung des Eigengewichts und der Standfestigkeit des Fahrzeugs bzw. Anhängers 1 auf das Fahrzeug bzw. Anhänger 1 ladbar ist und/oder Stützbeine (14), insbesondere herausfahrbare Stützbeine zur seitlichen Stabilisierung des Fahrzeugs bzw. Anhängers 1 angeordnet sind.

15. Fahrzeug bzw. Anhänger 1 nach Anspruch 13 oder 14, weiterhin umfassend einen Stromgenerator 64 zur Bereitstellung von elektrischer Energie zur Versorgung elektrischer Verbraucher, insbesondere Motore des Ladekrans (18, 51).
